# DEMANDE DE BREVET EUROPEEN

(11) **EP 1 130 934 A1**
(43) Date de publication de la demande: **05.09.2001**
(21) Numéro de dépôt: 01200599.7
(22) Date de dépôt: 20.02.2001
(51) Int. Cl.: H04Q 7/32, H04M 1/66

(54) **Radiotéléphone ayant une fonction de verrouillage du clavier avec un mot de passe**

(30) Priorité: 29.02.2000 FR 0002555
(71) Demandeur: Koninklijke Philips Electronics N.V., 5621 BA Eindhoven (NL)
(72) Inventeur: Coutant, François, 75008 Paris (FR)
(74) Mandataire: Chaffraix, Jean

(57) **Abrégé**

Il est proposé de verrouiller le clavier en appuyant sur des touches (10, 11, 12,...). Cependant pour éviter des usages inopportuns de l'appareil, il faut faire une séquence de touches dite secrète pour que l'appareil soit opérationnel. D'une manière avantageuse, cette séquence est déterminée par le code PIN contenu dans la carte SIM (30).

Application aux appareils mobiles de téléphonie cellulaire.

## Description

L'invention concerne un appareil comprenant un clavier et des moyens d'activation et de désactivation dudit clavier.

L'invention trouve d'importantes applications notamment dans le domaine des appareils téléphoniques mobiles faisant partie d'un réseau cellulaire. Dans ce genre d'appareil, il s'avère nécessaire de bloquer et donc de désactiver le clavier pour éviter qu'une pression accidentelle sur une des touches crée des effets malencontreux, comme, par exemple, altération du carnet d'adresses ou appel d'urgence, alors qu'il n'y a pas lieu de procéder à un tel appel.

L'invention concerne aussi un procédé pour protéger un clavier, d'appuis intempestifs de touches, convenant à un appareil cité ci-dessus.

Un tel appareil est connu du document de brevet européen publié sous le numéro 0 453 089. Par l'appui d'une séquence de deux touches, le clavier est bloqué et par l'appui de ces mêmes touches le clavier est débloqué.

L'appareil connu de ce document présente l'inconvénient que cette séquence est connue et qu'un tiers désinvolte peut utiliser l'appareil téléphonique et faire un appel aux frais de son légitime propriétaire.

La présente invention propose un appareil du genre mentionné dans le préambule, qui procure une protection contre des effets néfastes de l'appui malencontreux de touches et qui offre une protection contre l'utilisation frauduleuse de l'appareil.

Pour cela, un tel appareil est remarquable en ce que les moyens d'activation sont commandés à partir d'un mot de passe d'activation.

Un procédé du genre précité est remarquable en ce que le clavier est désactivé au moyen d'une première action de désactivation et en ce qu'il est activé au moyen d'une séquence d'appui de touches, qualifiée de secrète.

Ainsi, comme le code d'activation est plutôt secret, l'appareil est donc bien protégé des actions malintentionnées de tiers peu scrupuleux.

Un mode de réalisation selon lequel les moyens de désactivation sont indépendants des moyens de réception d'appel procure l'avantage que l'appareil est disponible pour signaler un appel rentrant.

Un mode de réalisation du procédé de l'invention convenant à un appareil satisfaisant à la norme GSM est remarquable en ce que l'activation dudit clavier fait appel au code CHV1 de ladite norme. Ainsi on obtient l'avantage supplémentaire que la mise en oeuvre de l'invention n'implique aucun matériel supplémentaire.

La description suivante, faite en regard des dessins ci-annexés, le tout donné à titre d'exemples non limitatifs fera bien comprendre comment l'invention peut être réalisée.

### Sur les dessins:

La figure 1 montre un appareil conforme à l'invention,
La figure 2 montre le schéma de l'appareil de la figure 1,
La figure 3 montre un organigramme explicitant le fonctionnement de l'appareil.

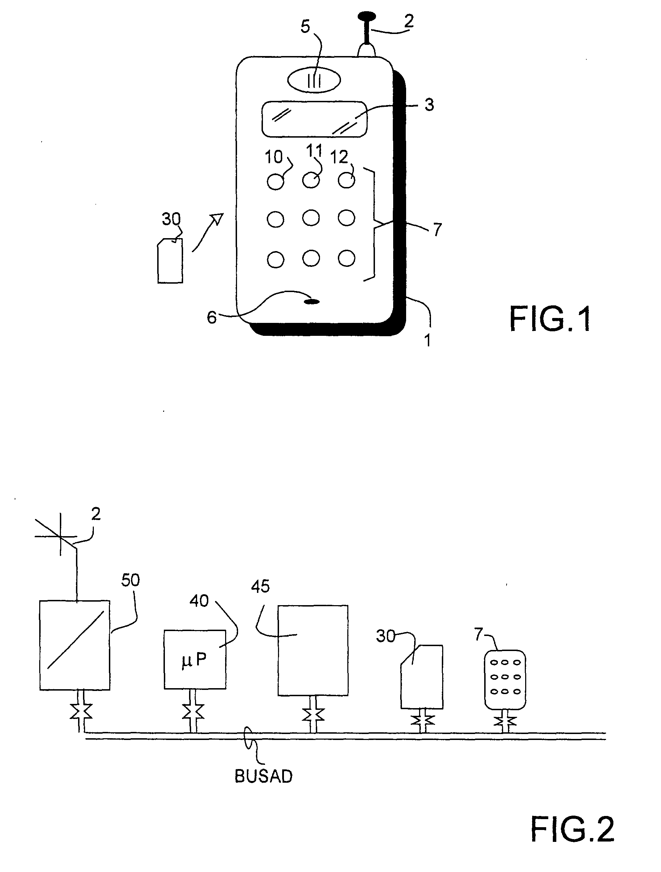

A la figure 1, on a représenté un appareil de téléphonie mobile formé d'un boîtier 1 comportant, notamment, une antenne 2, un écran 3, un écouteur 5, un microphone 6, un clavier 7 et différents autres boutons de manoeuvre 10, 11, 12, .... Différentes informations concernant l'utilisateur sont contenues dans une carte SIM 30 qui vient se loger à l'arrière de l'appareil. Cette carte SIM 30 est bien souvent utilisée dans les appareils destinés à communiquer dans les réseaux cellulaires du type GSM. On pourra consulter à ce sujet les normes de ce système.

La figure 2 montre un schéma de fonctionnement de l'appareil. Les éléments communs avec ceux de la figure précédente portent les mêmes références. Le fonctionnement de l'invention est défini par un ensemble à processeur comprenant le processeur 40 qui travaille avec une mémoire 45 et aussi avec la carte SIM 30. Tous ces éléments sont reliés entre eux par une ligne commune BUSAD. Pour commander d'autres éléments de l'appareil, la ligne BUSAD est reliée aussi au clavier 7 et à l'ensemble émission réception 50 de l'appareil.

Conformément à l'invention, le clavier est déverrouillé, donc activé, au moyen d'un mot de passe secret. De préférence ce mot de passe est le code PIN enregistré dans la carte SIM. En d'autres termes, on refait la même procédure qu'à l'allumage de l'appareil.

Lorsque le clavier est désactivé, l'ensemble d'émission réception est toujours apte à recevoir des appels. Bien qu'il soit dit que le clavier est désactivé, il est toujours possible de faire une séquence d'appuis de touches qui correspond au code PIN de la carte SIM qui constitue un support d'identification de l'utilisateur.

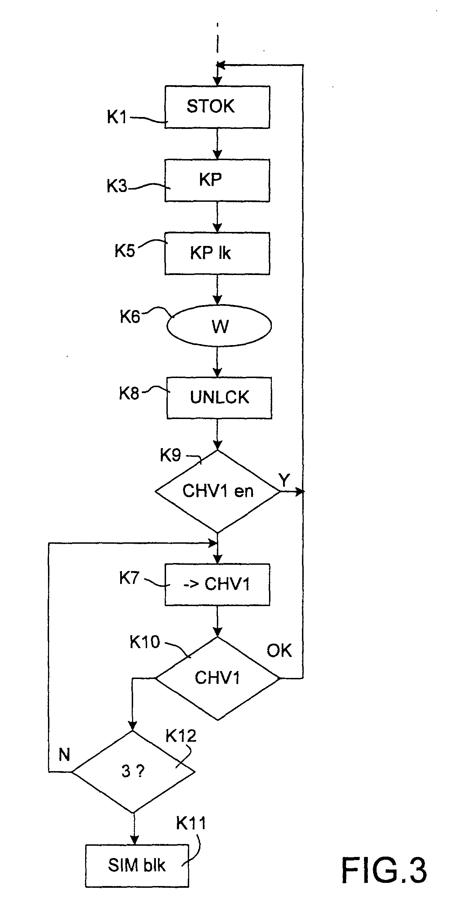

La figure 3 montre un organigramme qui explicite le fonctionnement de l'appareil. Sur cet organigramme, la case K1 indique l'état de fonctionnement normal de l'appareil, c'est-à-dire que toutes ses fonctions sont à la disposition de l'utilisateur. Lorsque l'utilisateur veut verrouiller son clavier il appuie sur une séquence de touches voire sur une seule touche, c'est ce qui est indiqué à la case K3. On aboutit alors à l'état verrouillé (case K5).

L'utilisation du code PIN dans le cadre de l'invention est rendue très facile grâce à une série de commandes incluant "VERIFY CHV and STATUS " décrite dans la norme GSMS ETS 300 608. Il n'y a donc pas lieu de prévoir de matériels supplémentaires.

Une fois le clavier bloqué (case K5), le mobile attend une action (case K6.) Cela peut être un appel entrant, un appel d'urgence mais aussi l'appui de la touche (ou séquence de touches) pour débloquer le clavier (case K8). Une fois la demande de déblocage du clavier saisie, le mobile contrôle si le CHV1 est activé ou non (case K9) grâce à la commande STATUS. Cette commande renvoie l'état du CHV1 (blocked ou unblocked, Enable ou Disable).

Si le CHV1 est activé, l'utilisateur va devoir saisir son code PIN. Avec ce code, le mobile va adresser la commande "VERIFY CHV1 " à la carte SIM (case K10), et si la réponse de la carte SIM est correcte, alors on passe à l'état de fonctionnement normal. Sinon, on repasse dans l'état de saisie du CHV1 (case K7).

Si le test de la case K9 fournit l'information STATUS montrant que la procédure CHV1 est désactivée, cela veut dire que l'utilisateur n'utilise pas le code PIN pour protéger sa carte SIM. Dans ce cas, il n'y a pas lieu de lui demander son code PIN, on retourne alors à la case K1.

Après 3 essais infructueux (case K12) de saisie du code PIN, la carte SIM se bloque (case K11) et un code spécial de déblocage connu de l'opérateur est nécessaire pour la déverrouiller.

## Revendications

1. Appareil comprenant un clavier et des moyens d'activation et de désactivation dudit clavier, **caractérisé en ce que** les moyens d'activation sont commandés à partir d'un mot de passe d'activation.

2. Appareil selon la revendication 1, **caractérisé en ce que** les moyens de désactivation sont commandés à partir d'un mot de passe de désactivation.

3. Appareil selon la revendication 1 dont le fonctionnement dépend d'informations contenues dans un support d'identification, **caractérisé en ce qu**'au moins le mot de passe de désactivation est contenu dans ce support, l'appareil contenant ce support.

4. Appareil selon l'une des revendications 1 à 3, **caractérisé en ce que** les moyens de désactivation sont indépendants des moyens de réception d'appel.

5. Procédé pour protéger un clavier, d'appuis intempestifs de touches, convenant à un appareil selon l'une des revendications 1 à 4, **caractérisé en ce que** le clavier est désactivé au moyen d'une première action de désactivation et en ce qu'il est activé au moyen d'une séquence d'appui de touches, qualifiée de secrète.

6. Procédé selon la revendication 5 convenant à un appareil muni d'un support d'identification renfermant un code d identification, **caractérisé en ce que** ladite séquence secrète est définie par ledit code d'identification.

7. Procédé selon la revendication 6 convenant à un appareil satisfaisant à la norme GSM.

8. Procédé selon la revendication 7, **caractérisé en ce que** l'activation dudit clavier fait appel à la procédure CHV de ladite norme.
